# EUROPEAN PATENT APPLICATION

(11) **EP 2 314 663 A1**
(43) Date of publication of application: **27.04.2011**
(21) Application number: 10174884.6
(22) Date of filing: 01.09.2010
(51) Int. Cl.: C10L 5/44

(54) **Method for pretreating and using the fine particles of a biomass in a gasification process and an apparatus utilizing said method.**

(30) Priority: 08.09.2009 FI 20090327
(71) Applicant: VAPO OY, 40100 Jyväskylä (FI)
(72) Inventor: Timonen, Mika, 40420, Jyväskylä (FI); Kautto, Jorma, 01390, Vantaa (FI)
(74) Representative: Vastavuo, Juhani Veli

(57) **Abstract**

Method for pretreating the fine particles of a biomass. What is essential in the method is that, for pretreating the fine particles for the gasification, the fine particles are granulated by means of pellet presses or suitable briquetting devices or corresponding granulating devices such that their particle size is advantageous for coking and for the quenching of syngas.

## Description

The object of the invention is a method as defined in the preamble of claim 1 for pretreating the fine particles of a biomass for a gasification process. The invention also relates to a use as defined in the preamble of claim 9 and an apparatus as defined in the preamble of claim 13.

Prior art includes different solutions with which biomass is gasified. For example, a gasification technique of biomass is known in the art, in which technique the biomass to be gasified is led into a coking reactor (i.e. low-temperature gasifier) after chipping and drying. The coking reactor operates at a pressure of 1-20 bar, typically at a pressure of 5 bar, and at a temperature of 400-500°C. For coking the biomass, a gas compound (gasifying agent) is led into the reactor, which compound is typically a mixture of oxygen and carbon dioxide. Steam can also be used as a component of the gas compound. When the gas compound and biomass react, pyrolysis gas and coke are produced in the reactor. Pyrolysis gases can be further gasified in a high-temperature gasifier. Pyrolysis gases contain hydrocarbon chains, i.e. also tar, for which reason the gas pipe to the high-temperature gasifier is insulated so that condensation of tars is prevented.

Pyrolysis gas is led to the high-temperature part of the gasifier, in which it reacts with oxygen typically at a temperature of approx. 1400°C, in which case the hydrocarbon chains break down completely, forming carbon monoxide (CO), carbon dioxide (CO₂), hydrogen (H₂) and steam (H₂O) and small amounts of other gases, such as hydrogen sulphide (H₂S). The hot gases flowing downwards are led via a reversal chamber to the rising reactor part of the gasifier, i.e. to the quenching zone, in which the cooling of hot gases occurs. In other words, quenching in this context refers to the cooling of gas that occurs relatively quickly and in a controlled manner. To achieve a controlled process, the coke (=carbon) that is received from the coking reactor and crushed into suitable particle sizes is fed to the quenching zone. The coke and hot exhaust gases react endothermically (absorbing heat) with each other, in which case the gas cools to <900°C, the amount of syngas (H₂ and CO) maximizes, the amount of carbon dioxide minimizes and a suitable H₂/CO ratio for syngas applications is produced.

C + CO₂ = 2 CO +162 MJ/kmol

C + H₂O = CO + H₂ +119 MJ/kmol

Prior-art solutions have a number of drawbacks, e.g. the biofuel to be fed in has not contained the appropriate particle size of fuel required by the process, but instead there have been too many fine particles and in this way the operation of the process has suffered. The biofuel to be fed in must contain suitable particle sizes so that the ratio of the pyrolysis gas to the carbon (coke) used in the quenching remains suitable. If there are too many fine particles, too much pyrolysis gas is generated and fine particles are further swept along with the pyrolysis gas into the high-temperature gasifier. In this case there is not enough coke for chemical quenching, as a result of which the quality of the syngas generated deteriorates and the overall efficiency ratio of the process decreases. Too low an amount of carbon (coke) in relation to the amount of gas of the gasification reactor also results in the amount of reactions absorbing heat decreasing and the gas exiting from the gasifier too hot, in which case it cannot be further cooled with conventional heat exchangers, but instead special solutions are required.

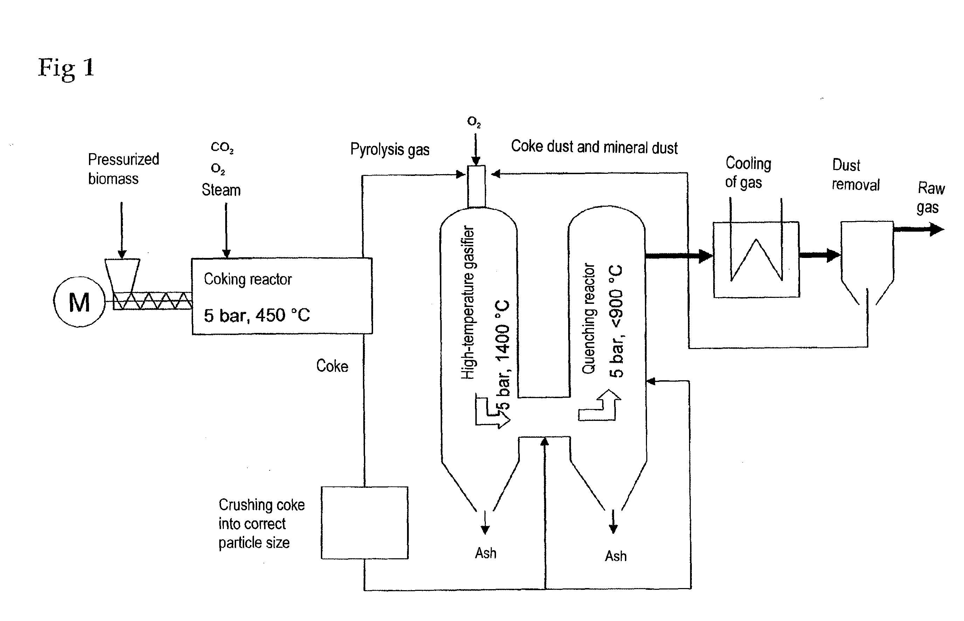

In order to succeed the quenching process requires a certain residence time for the coke in the reactor and this is achieved by feeding coke that is crushed into appropriate particle sizes into the reactor. In Fig. 1 the material left over in quenching goes to the HTG part via the dust removal of raw gas. If the coke fed to quenching is too fine, the reactions do not occur in a desired manner.

Owing to this, according to the specifications of equipment manufacturers, raw wood material with a particle size of < 3 mm can account for at most 5% of the mass. This is taking into account and knowing that potential raw materials of biomass, such as logging residue chips (logging residue chips refer to branches and top refuse) and also whole tree chips (whole tree chips refer to chips made of complete trees including tree trunks and branches) include a lot of small branches, needles and leaves.

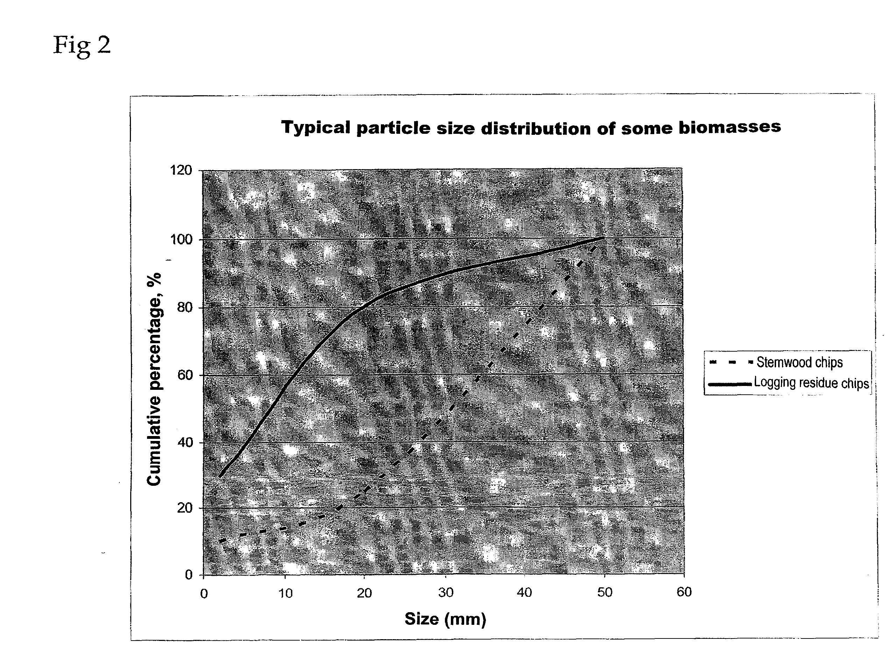

According to Fig. 2, this type of raw material comprises a lot of fine particles; material of < 3mm can account for even > 30% in a typical particle size distribution. In stem chips made of stemwood, however, the particle size is close to the requirements of the equipment manufacturer.

Bark chips generated as a by-product in the pulp industry, paper industry and sawmill industry vary in terms of their properties. The fine particle content of bark chips is in the best case suited to the gasification process, but in order to increase the particle size the chips must often be treated with the method according to the invention. The same applies to the by-products of the wood processing industry, such as sawdust, screening chips and cutter chips. They are not applicable, as such, as the raw material of the gasification process, but instead they must be granulated, i.e. pelletized or briquetted, with the method according to the invention in order to increase the particle size. Likewise, milled peat is very fine and using it without the aforementioned granulation is not possible in this type of process.

According to what is presented in the preceding, the aim of this invention is to achieve a new type of solution. In this way prior-art problems can be avoided. The essential features of the invention significantly affect the method and the apparatus utilizing said method, and also the use of said apparatus, which features are defined in the claims.

Now with the solution according to the invention, the gasification process can be more efficiently utilized and at the same time the operation of the apparatus can be optimized. The inventiveness of the apparatus is particularly based on granulating, i.e. pelletizing and/or briquetting, the fine particles impeding the process with the method according to the invention in order to increase the particle size. What is particularly essential to the invention is to utilize the use of pellet presses or suitable briquetting devices for pretreating the fine particles of a biomass for the purpose of gasification.

With the solution according to the invention, the fine particles of a biomass can now be utilized considerably more efficiently, and also by pretreating said fine particles better syngas is produced.

More precisely, the invention is characterized by what is stated in the claims.

The invention relates to a method for pretreating the fine particles of a biomass. What is essential in the method is that, for pretreating the fine particles for the gasification, the fine particles are granulated by means of pellet presses or suitable briquetting devices such that their particle size is advantageous in coking and quenching.

What is important in the method is that fine particles are pretreated into pellets or briquettes such that they stay intact in the coking reactor without being exposed to the pyrolysis gas. And in this way increasing the optimal size of the particles to be led to the quenching zone in the method for improving the efficiency ratio of the syngas.

The method according to the invention can be implemented, if necessary, in two ways. Either such that in the method fine particles are separated from the raw material flow after drying or alternatively already before drying from the wet or partially dried biomass. According to the process, after the drying, the fine particles to be pelletized are separated from the raw material flow by screening. The separated coarse material can be transported directly to the fuel feed bin of the gasifier and the fine particle flow can be pelletized in its entirety after drying.

In the second implementation method the screening is performed on the wet or partially dried biomass. One advantage in this method is that the fine particles and the coarse material can, if necessary, be dried using different drying parameters and possibly different dryer apparatuses because coarse material dries more slowly than fine particles. A drum dryer can in this case be used for drying the fine particles while the coarse material is best suited for drying by a belt dryer. One drawback in this implementation method is, however, that when screening wet, the fine particles tend to adhere to the coarse material and the separating capacity in screening deteriorates and the drying process becomes more complex. In short, due to this, the implementation methods vary depending on the process.

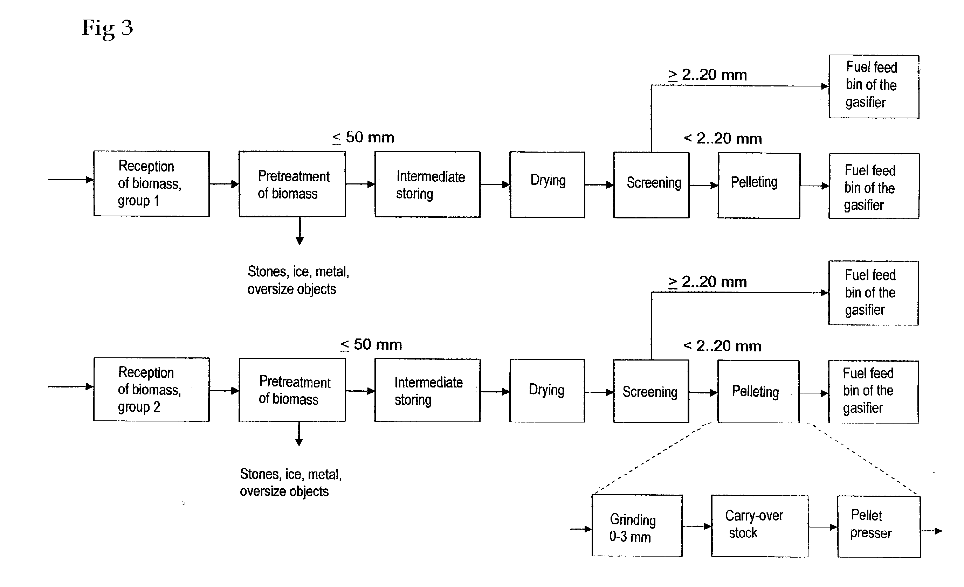

According to Fig. 3, what is essential in the method according to the invention is that the fine particles of the biomass are granulated by means of pellet presses or suitable briquetting devices such that their particle size is in accordance with the requirements of the gasifier manufacturer. Fine particles are ground into suitable particle size for pelletizing and fed to the pellet press via a carry-over stock. In the method fractions that go through a 2 - 20 mm screen are used as fine particles. A preferred particle size in quenching is in the range 2 - 10 mm and the particle size of a pellet or briquette produced with a pellet press is typically in the range 6 - 16 mm in diameter and the length approx. 2 - 4 times the diameter.

Fuel must often be dried to a suitable humidity of 10 -15% for the gasification. At the same time it is known that wood and peat-based materials pelletize at the corresponding suitable humidity of 5 - 15%, most preferably of approx. 10%, so this is preferred humidity also from the point of view of the gasification process.

In the method pellets and/or briquettes are made most preferably of peat, logging residue chips, bark chips or by-products of the wood processing industry, such as sawdust, screening chips and cutter chips, or field biomass such as reed canary grass or straw. Fine particles are separately separated from the wood chips and bark chips into a raw material flow of their own for producing pellets and/or briquettes. The pellets and/or briquettes used in the method are produced most preferably from one raw material as separate clean fine particles, alternatively mixed pellets or briquettes can also be made of them as a mixture of one or more different type(s) of fine particles. In this way 2-5 different fuel feed bins are available in the gasification process, from which bins raw materials, i.e. wood chips, chippings and pellets, can be dispensed suitably proportioned into the coking reactor.

Test runs have additionally been performed with the solution according to the invention; in the examples the pellets made of peat stayed intact very well during coking and even the pellets made of logging residue chips/bark fully sufficiently. Wood pellets were produced with a small-scale test equipment - i.e. the mechanical properties of pellets can still be improved by optimizing the process.

In addition to the aforementioned method, the invention also relates to an apparatus for pretreating the fine particles of a biomass and utilizing said method. The apparatus comprises one or more pellet presses or suitable briquetting devices for pretreating the fine particles for the gasification. By means of the apparatus a suitable particle size of coke is achieved, which particles are led to quenching in order to produce suitable syngas.

It is obvious to the person skilled in the art that the invention is not limited to the embodiments presented above, but that it can be varied within the scope of the claims presented below.

## Claims

1. Method for pretreating the fine particles of a biomass **characterized in that** in the method for pretreating the fine particles for the gasification the fine particles are granulated by means of pellet presses, briquetting devices or other devices suitable for granulation such that their particle size is advantageous for coking and the quenching of syngas.

2. Method according to claim 1, **characterized in that** in the method the fine particles are pretreated into a pellet, briquette or corresponding product such that they stay intact in the coking reactor without being exposed to the pyrolysis gas, thereby increasing the optimal size of the material to be led to the quenching zone in the method for improving the efficiency ratio of the syngas.

3. Method according to claim 1 or 2, **characterized in that** in the method the fine particles are separated from the raw material flow by screening after drying or by screening before drying from the wet or partially dried biomass.

4. Method according to claim 1 - 3, **characterized in that** in the method a drum dryer is used for drying the fine particles.

5. Method according to claim 1 - 4, **characterized in that** in the method pellets and/or briquettes are most preferably produced of peat, logging residue chips, bark chips or by-products of the wood processing industry, such as sawdust, screening chips or cutter chips or field biomass, such as reed canary grass or straw, as separate clean fine particles or alternatively as mixed pellets and/or briquettes made of one or more type(s) of different fine particles.

6. Method according to claim 1 - 5, **characterized in that** in the method the fine particles are separately separated from the raw material flow, such as from the wood chips and bark chips, into fine particles of their own for producing pellets and/or briquettes and/or other corresponding products.

7. Method according to claim 1 - 6, **characterized in that** preferably 2 - 5 different fuel feed bins are used in the gasification process according to the method for dispensing raw material, such as wood chips, bark chips and pellets and/or briquettes made of fine particles, suitably proportioned into the reactor.

8. Method according to claim 1 - 7, **characterized in that** the fraction that goes through a screen of 2 - 20 mm, is used as fine particles in the method, a preferable particle size is in the range 2 - 10 mm and the particle size of a pellet or briquette produced of said fine particles is in the range 6 - 16 mm in diameter and the length is approx. 2 - 4 times the diameter, and the humidity 5 -15%, most preferably approx. 10%.

9. Use of pellet presses, briquetting devices and/or corresponding granulating devices for pretreating the fine particles of a biomass for the gasification.

10. Use for the purpose of gasification according to claim 9 such that for achieving suitable syngas the particle size of pellets is advantageous in quenching.

11. Use for pretreating of fine particles into pellets according to claims 9 and 10 such that they stay intact in the coking reaction without being exposed to the pyrolysis gas, thereby simultaneously increasing the optimal size of the material to be led to the quenching zone for increasing the amount of syngas.

12. Use according to claim 9 - 11 of a drum dryer used for drying of fine particles.

13. Apparatus for pretreating the fine particles of a biomass **characterized in that** the apparatus comprises one or more pellet presses, a suitable briquetting device and/or corresponding granulating device for pretreating the fine particles for the gasification, in which case the fine particles are granulated by means of pellet presses, suitable briquetting devices and/or corresponding granulating devices into a suitable particle size and led such that their particle size is advantageous for coking and the quenching of syngas.

14. Apparatus according to claim 13, **characterized in that** by means of the apparatus the fine particles are pressed into pellets, briquettes or corresponding granules such that they stay intact in the coking reaction without being exposed to the pyrolysis gas and are led to the quenching zone for increasing the amount of syngas in order to both cool the gas and to achieve a suitable chemical composition (H₂/CO₂).

15. Apparatus according to claim 13 and 14, **characterized in that** with the apparatus the fine particles are separated from the raw material flow by screening after drying or by screening before drying from the wet or partially dried biomass.

16. Apparatus according to claim 13 - 15, **characterized in that** the apparatus comprises one or more screens, through which a fraction of 2 - 20 mm goes into fine particles, and a pellet press, suitable briquetting device or other corresponding granulating device, the particle size of pellets or briquettes produced in which is in the range 6 - 16 mm in diameter, most preferably 6 - 8 mm, and the length is approx. 2 - 4 times the diameter, and drying, in which the humidity is 5 -15%, most preferably approx. 10%.

17. Apparatus according to claim 13 - 16, **characterized in that** the apparatus comprises a number of screens, in which fine particles are separately separated from a different raw material flow, such as from wood chips and bark chips, into fine particles of their own for producing pellets and/or briquettes such that in the gasification process there are preferably 2 - 5 different fuel feed bins for separately dispensing raw material and pellets and/or briquettes made of fine particles suitably proportioned into the reactor.
